# EUROPEAN PATENT SPECIFICATION

(11) **EP 1 183 515 B1**
(45) Date of publication and mention of the grant of the patent: **31.08.2005**
(21) Application number: 00937483.6
(22) Date of filing: 31.05.2000
(51) Int. Cl.: G01N 3/56

(54) **METHOD AND DEVICE FOR ABRASION DETERMINATION**
VERFAHREN UND GERÄT ZUR ABRIEB-BESTIMMUNG
PROCEDE ET DISPOSITIF DE DETERMINATION DE L'ABRASION

(30) Priority: 03.06.1999 SE 9902075
(43) Date of publication of application: 06.03.2002
(73) Proprietor: Volvo Personvagnar AB, 405 08 Göteborg (SE)
(72) Inventor: PALMERTZ, Camilla, S-426 71 Västra Frölunda (SE); NILSSON, Tomas, S-302 53 Halmstad (SE); LID N, Jenny, S-302 48 Halmstad (SE)
(74) Representative: Lindberg, Klas Valter Bo
(86) International application number: PCT/SE2000/001129
(87) International publication number: WO 2000/075625

(56) References cited:
- EP-A2- 0 499 215
- US-A- 5 648 915
- PATENT ABSTRACTS OF JAPAN & JP 60 177 243 A (TOYOTA JIDOSHA KK) 11 September 1985
- DATABASE WPI Week 199134, Derwent Publications Ltd., London, GB; AN 1991-250743, XP002955312 & SU 1 596 228 A (IRKUTSK ZHDANOV) 30 September 1990

## Description

### TECHNICAL FIELD

The present invention relates to a method for abrasion determination as set forth in the preamble of the appended claim 1, and to a device for abrasion determination as set forth in the preamble of the appended claim 8. More particularly, the invention relates to such a method and device for assessment of the abrasive forces to which an individual is exposed upon impact against an airbag in the inflating stage of the latter or against interior surfaces.

### TECHNICAL BACKGROUND

Contact between two surfaces causes various types of effects that may be harmful to at least the more sensitive one of the two surfaces. Examples of effects of this kind are pressure, friction and abrasive forces.

By abrasive forces should be understood herein the forces occasioned by an uneven surface sliding against another surface under pressure, for example by the frictional contact of a sandpaper against a piece of wood. Another example is exposure of the human skin to sliding contact against rough surfaces, such as asphalt paving or coarse textiles. The furrows that the scraping or abrasion causes on the human skin may result in injuries with consequential bleeding and scarring.

Abrasive forces may be of different nature. The contact surface may be of varying coarseness and/or be applied with varying pressure. Coarser surfaces and/or higher pressures result in more severe abrasions. The more severe the abrasive forces, the higher the risks of abrasion-induced injuries and as a consequence, of scarring.

While several methods have been developed to measure pressure-induced damages, hitherto no satisfactory methods have existed to accurately assess the abrasive forces that arise for example to the human skin in situations of the kind outlined above.

For example, the cloth of an airbag brought into contact with the skin of a person inside the car could cause abrasion injuries. The surface of contact of the air bag varies according to the stage of inflation of the airbag. In other words, it is important to study the detrimental effects that the airbag may have on the human skin, in order to assess any abrasive forces and, in consequence thereof, for example to develop airbags which, upon their contact with the human skin, cause as little abrasion as possible.

One method used precisely in vehicle crash tests, of finding out whether two surfaces come into contact with one another, is to coat the exposed body parts, such as the arms and the face of a crash-test dummy, with a coating of paint. In its simplest form, the coating has consisted of lipstick and in more complex cases of a solution of pigments mixed with a hardener for suitable hardness. The information gained from these tests has, however, been of a discrete nature; it has only been possible to deduce therefrom whether the two surfaces have been in contact with one another or not.

Another problem found with the above method is that as a rule the pigment solution is sprayed onto the crash-test dummy, with resulting difficulties in obtaining a coating of even thickness throughout, which is necessary in order that the indication be comparable across the entire relevant area.

In Patent Specification DE 2448784 are described a method and a device for checking the configuration of a glass slab along the outer slab periphery. The check is performed by placing the glass slab in a check frame. Along a comparatively narrow section of the glass slab, corresponding to the outer periphery of the glass slab, several layers of paper having different colors are applied one on top of the other. As the glass slab is placed inside the frame, the slab, should its shape not coincide with that of the frame, will scrape off the paper layers locally, where the slab configuration does not agree with that of the frame. Depending on where and on how much the layers are scraped off, it becomes possible to make an evaluation of the configuration of the glass slab.

It is also known from SU 1596228 to coat the rotating cutting tools of an earth milling machine with several layers of paint in order to establish which sections of the tool are most exposed to wear. In this case, the scraping-off of the paint occurs gradually, in the same place, as the cutting tools are rotating, i.e. the larger the number of rotations, the more severe the scraping effects. The results only indicate that a certain spot on the cutting tool is exposed to more scraping or wear damage than another spot.

JP 60177243 describes a device and a method of discovering irregular wear on vehicle tires. A part of the tire wear face is coated with several differently colored layers of rubber. Also in this case the scraping-off is gradual on the spots most exposed to scraping effects as the tire is rotating, i.e. the larger the number of rotations, the more severe the scraping effects. The results only indicate that one spot on the tire is more exposed to scraping damage than another spot.

In the light of the above, the object of the invention thus is to provide a method allowing more precise assessment of the severity and the extent of abrasive forces, such as for example those to which a human being may be exposed upon impacts against an airbag in the inflated condition of the latter or against other interior surfaces of a vehicle, and also to provide a device for implementing the method, which device is as simple as possible while at the same allowing precise assessment of abrasion.

### SUMMARY OF THE INVENTION

The solution in accordance with the invention with respect to the inventive method is defined in claim 1 and with respect to the inventive device in claim 8. Other claims define preferred embodiments and developments of the inventive method (claims 2 to 7) and the inventive device (claims 9 to 19).

The method in accordance with the invention comprises the steps of applying on a substrate two or more distinguishable superposed layers, which may be scraped off and which cover each other, according to which method the very measurement of abrasion is effected by exposing the substrate with the layers applied thereon to abrasive forces, followed by reading of the degree of penetration, if any, through one or several of the different layers, and assessing the extent of the abrasive forces. Each layer is calibrated to correspond to a pre-determined measure of abrasive force required to penetrate the respective layer, by varying the layer's ability of adhering to the layer or substrate underneath, the calibration being such that the measure of abrasive force required to scrape off a certain layer decreases the closer to the free surface that the layer is located.

The advantage of the invention is the possibility it offers of simulating complex surfaces, such as for example the human skin, in a more precise manner.

By applying several layers, distinguishable from one another, on the substrate it becomes possible to determine the strength of the abrasive force within pre-determined intervals. To scrape off the first layer, abrasive force of a pre-determined strength is required, whereas a stronger abrasive force is required to simultaneously scrape off the next layer underneath, and so on.

The layer that becomes exposed within an area subjected to abrasive forces thus indicates the strength of the abrasive force.

In accordance with a first advantageous embodiment of the inventive method the thickness of the individual layers differs, i.e. the closer the layer is located to the surface the thinner the layer. The adhering force of the layers thus is reduced.

In accordance with another advantageous embodiment of the inventive method not only the strength of the penetrating abrasive force is assessed but also the place of penetration on the surface subjected to the abrasive force, and thus a picture of the location of the abrasive forces is obtained.

In accordance with a third advantageous embodiment of the inventive method, the extent or area of scraped-off sections on each respective layer is assessed, which provides a precise picture of the extension of the abrasive forces.

In accordance with a fourth advantageous embodiment, both the position and the extent on the surface subjected to abrasion are determined.

It should be noted that also on the spots where several layers are scraped off, this process takes place in one single scraping motion. Thus, it is not a question of a gradual scraping-off action, with one layer at a time being scraped off. The idea is to determine the instantaneous strength of the abrasive force and, in accordance with the advantageous embodiments mentioned above, also the extension and/or location thereof.

In accordance with a preferred further development of the inventive method, the distinction feature may be of a visual nature, for example because the individual layers are differently patterned and/or colored, but could of course also be invisible to the eye. For example, the distinction feature could be achieved by using different reactants to radiation (such as UV radiation) in the various layers, wherein the reaction to the radiation varies in a measurable way, such that the section subjected to abrasive forces may be radiated in order to identify the areas exposed to abrasive force of different strength. The individual layers could also have different crystalline properties and/or reflection coefficients.

In accordance with another further development of the method in accordance with the invention, the identification of the uncovered parts of the respective layer preferable is made by scanning the entire section digitally and thereafter data processing the section in a suitable manner. An identification method of this kind is already known in the art for instance from EP 442699. In this case, the scanned object is radiated in the conventional way by a beam of light and the two-dimensional image information is then picked up with the aid of a sensor device. The sensor device reproduces the scanned object and converts the light image to electrical signals.

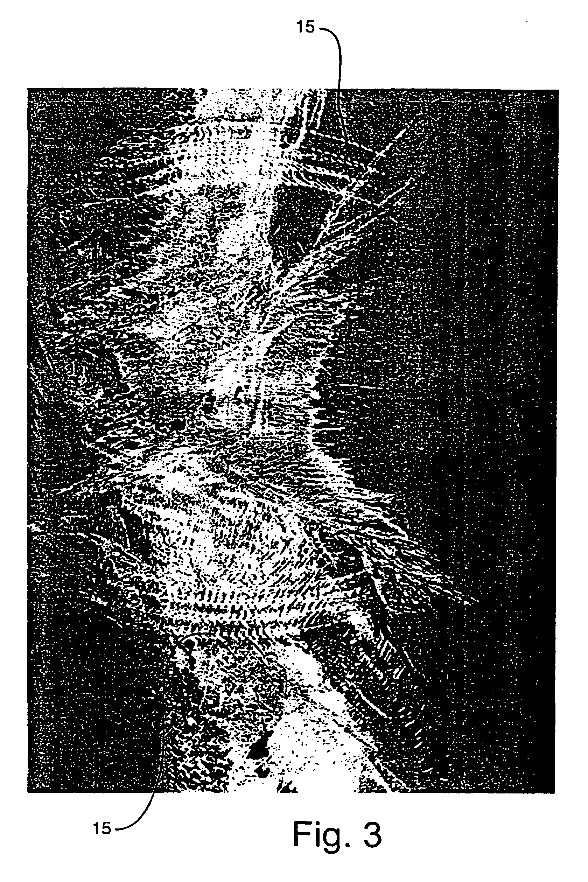

In accordance with a fifth preferred embodiment of the inventive method, the layers may be subjected to abrasive force for example by contact with an expanding air bag. Tests of this nature by means of a prototype of the inventive object have resulted in the pattern shown in Fig 3, to be discussed in more detail in the following. The pattern clearly shows marks from the airbag seams, which obviously have caused more severe abrasion injuries than the more smooth sections of the airbag.

In accordance with a sixth embodiment of the method in accordance with the invention, the layers are applied on a crash-test dummy, which is subjected to a vehicle collision. The dummy, coated in accordance with the teachings of the invention, then provides information as to the location and the extent of the abrasion to the dummy. These information data together with for instance video recordings of the crash process indicate which interior surfaces inside the vehicle cause abrasion injuries. In addition, it is possible to coat the interior surfaces with layers in accordance with the teachings of the invention, in order to obtain information as to which surfaces are hit and cause abrasion.

The advantages of the invention are obvious. Clear information is obtained as to within which intervals the strength of the abrasive force resides, while at the same time it becomes possible to assess the location and the extent of the abrasion. Another advantage provided by the invention is that it is comparatively simple use.

The device in accordance with the invention comprises a substrate, onto which at least two layers that are distinguishable from each other and are removable by scraping are applied, one on top of and covering each other, each one of said layers being calibrated with respect to its different ability to adhere to the layer underneath or to the substrate, such that it corresponds to a predetermined measure or strength of scraping force at which the respective layer is penetrated, and wherein the measure or strength necessary to scrape off a certain layer diminishes the closer to the free surface that said layer is located.

The most important advantages gained by the device in accordance with the invention is the possibility it offers to more precisely simulate complex surfaces, such as for example the human skin, which makes it possible to assess the abrasion, while at the same time the inventive device is simple to manufacture and to use.

According to a first advantageous embodiment of the inventive device, the thickness of the individual layers differs in that the thickness of the layers decreases the closer to the surface that the layer is positioned, and in this manner the resistance against abrasion also differs. The variable resistance against abrasion that the individual layers possess is essential to the method and to the device in accordance with the invention.

In accordance with a second advantageous embodiment of the inventive device, the layers are applied on a sheet made from a suitable material. A device of this kind is useful in the implementation of the method according to the invention. A sheet of a non-stretchable material is easy to apply on surface comprising a single curve whereas a sheet of a stretchable material, such as plastic foil, could be applied on surfaces comprising double curves or having a more complex configuration.

The sheets as such could consist of a plastic material, preferably a plastic foil, according to another embodiment of the inventive device. Owing to the higher pliability of the material and its stronger tendency to withstand elongation and stress, this embodiment is more suitable for surfaces comprising double curves or having a more complex configuration, such as is the case for instance as regards the face of a crash-test dummy.

An advantage of this device is that it may be manufactured under suitable and controllable conditions, which guarantees that the layers possess the desired properties. This eliminates the inconvenience of having to apply the layers directly on e.g. a test dummy, and instead it becomes possible to use pre-fabricated sheets.

According to a third embodiment of the inventive device, the individual layers may comprise one scrape-off coat and one top-coat, the surface of the latter layer being harder than that of the scrape-off coat. In this case, the thickness of the top-coats may decrease as seen from the substrate upwards, less strong abrasive force thus being required to penetrate a top-coat located closer to the surface. Obviously, it is also in this case possible to vary the ability to adhere. The adhesion against any one underlying layer that a layer composed of a top-coat and a scrape-off coat possesses is determined by the adhesion between the top-coat and the scrape-off coat underneath, i.e. in the layer. Briefly speaking, it is the top-coat that determines the resistance against abrasion in is type of layer.

Additional advantageous embodiments of the invention will become apparent from the attached dependent claims.

It may be desirable to adapt the adhesion of the individual layers to predetermined abrasive force levels, for the purpose of simulating as far as possible the properties of the human skin and to obtain easily interpretable indications of abrasion. One possibility in this respect is to make use of the damage codes of the ARS system (Abrasion Rating System) described in "Airbag-Induced Skin Abrasions: Design Factors and Injury Mechanisms" by Reed, Schneider and Burney, University of Michigan, 1992, which is set forth in the table below.

Tests show that it is possible, by adaptation of the properties of the layers as exemplified below, to relate each layer to a pre-determined ARS level, and thus to facilitate the subsequent interpretation of the effects of abrasion.

**Table 1:**

| ARS System Levels | |
|---|---|
| ARS | |
| Level | Description of damage |
| 1) | Abrasion not sufficiently severe to cause bleeding or flow of fluids 24 hours or less after the accident. Erythema or brief discoloration of skin. |
| | |
| 2) | Bleeding, dripping fluids or formation of crust at the earliest after 30 minutes but within 24 hours of the accident. |
| | |
| 3) | Superficial, incomplete abrasion lesion on the skin, characterized as lesion on the upper layer of dermis and fine spot-like bleeding from the vessels. |
| | |
| 4) | Deep, incomplete abrasion lesion characterised as lesion on the lower dermis layer with more extensive spot bleeding. |
| | |
| 5) | Complete abrasion lesion throughout the entire dermis and into the subcutaneous tissue. |

### DESCRIPTION OF DRAWING FIGURES

The present invention will be described in more detail in the following with reference to the accompanying drawings, which for exemplifying purposes show further preferred embodiments of the invention and wherein:
Fig 1 is a schematic explosive view of an advantageous embodiment of device in accordance with the invention.
Fig 2a shows a testing rig for determination of abrasion from an airbag on the arms of the driver.
Fig 2b shows a testing rig as in Fig 2a while the test is in progress.
Fig 3 shows the results from a test carried out as shown in Figs 2a-b.

### DESCRIPTION OF PREFERRED EMBODIMENTS

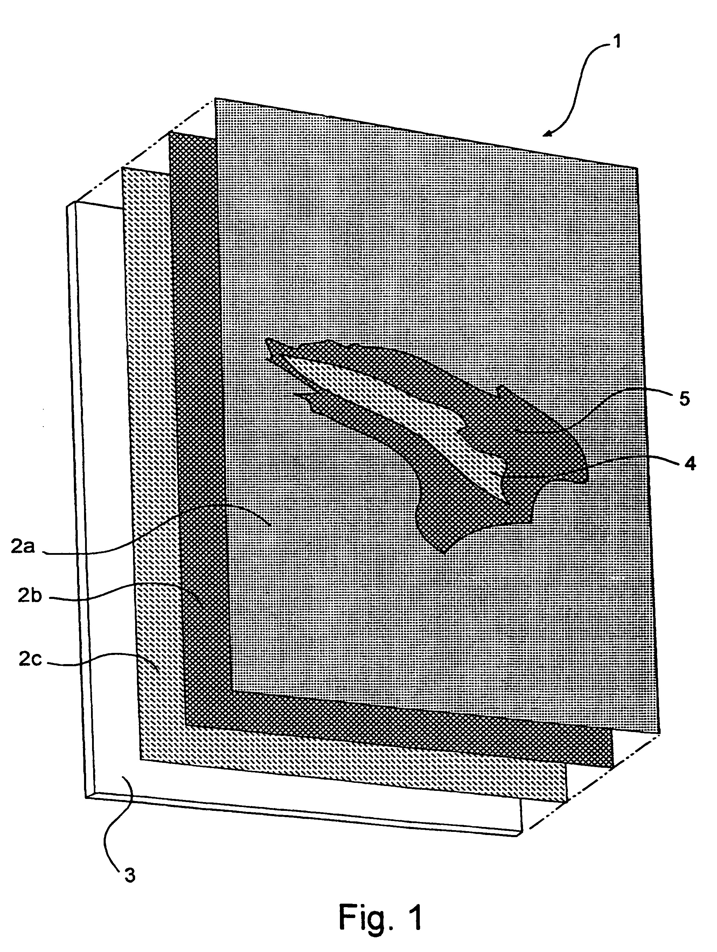

Fig 1 shows a device 1 in accordance with one embodiment of the invention, comprising several layers, in the present case (for example) three layers 2a, 2b, 2c applied to a substrate 3, such as a sheet of paper or plastic foil. According to the drawing figure, one area 4, 5 has been exposed to abrasive force.

In accordance with one advantageous embodiment, each layer 2a, 2b, 2c is formed by two coats, viz. one colored coat of a scrape-off paste and a harder top-coat of a UV varnish. This layer composition is conventionally used on scrape-off lottery tickets.

Since in contrast to scrape-off lottery tickets the device in accordance with the invention comprises several layers 2a, 2b, 2c, the top-coat of an underlying layer 2b and 2c, respectively, must be the carrier of the scrape-off coat of the neighboring layers 2a and 2b, respectively. The properties of the top-coat and the scrape-off coat, respectively, such as thickness, hardness, porosity, surface texture and so on, determine the inter-layer adhesion and consequently the strength of the abrasive force required to scrape off a layer from the layer immediately below. It is advantageous that the adhesion is reduced for each layer applied to the substrate, i.e. that the strength of the adhesion between two layers is lower the longer the distance to the substrate. The reason therefor is to ensure that the number of layers scraped off indicate the strength of the abrasive force. The top layer 2a, which is the one furthest away from the substrate, should be easier to scrape off than the immediately following layer 2b, which in turn is easier to scrape off than the immediately following layer 2c, and so on.

Preferably, the top-coat closest to the substrate 3 is made relatively thick whereas the top-coats subsequently applied are thinner. As a thick top-coat of varnish is more difficult to penetrate than a thin one, the arrangement makes it possible to obtain differentiation between required abrasive force in dependency of the depth position of the layers.

According to another preferred embodiment the uppermost scrape-off coat 2a is without a top-coat entirely, in order to further reduce the strength of abrasive force required to scrape off the uppermost colored layer.

The layers shown in Fig 1 have been subjected to abrasive force of varying strength. In a centrally located area 4 the abrasive force has scraped off two layers 2a, 2b, thus uncovering or exposing the third layer 2c. In another area 5, surrounding area 4, only the uppermost layer 2a is scraped off, and in this area 5, the second layer 2b thus is uncovered. The abrasive force that may have affected the device externally of area 5 thus has been too weak to scrape off even the uppermost layer 2a.

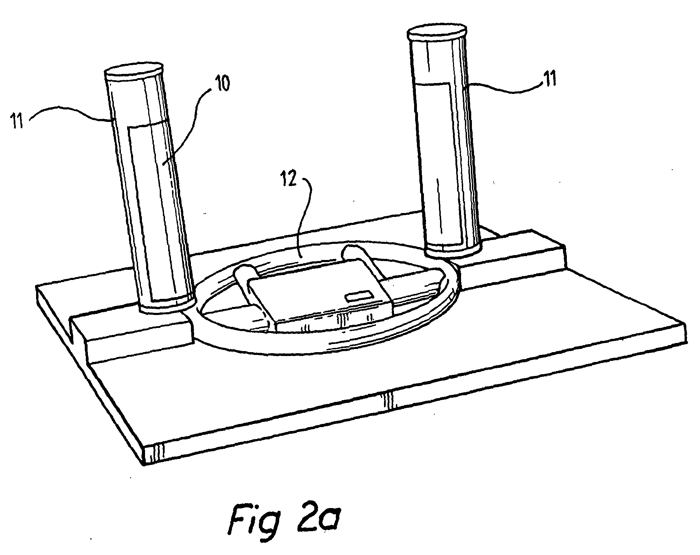

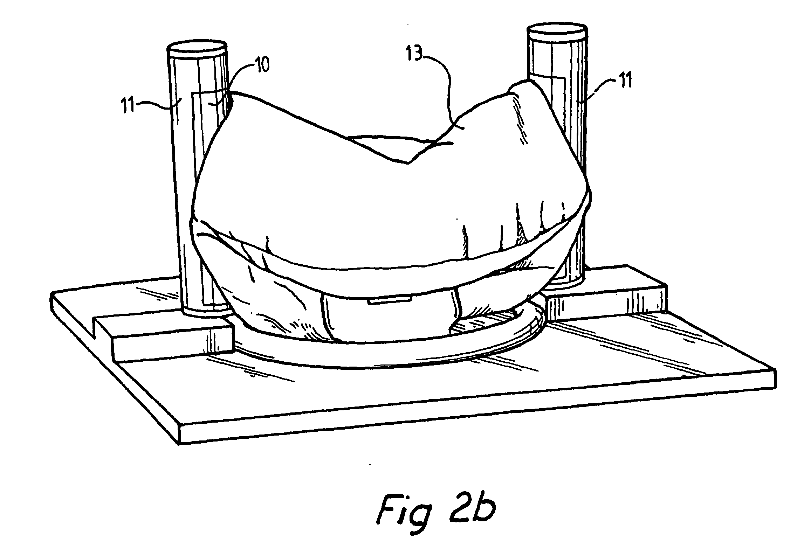

One advantageous application of the method and the device in accordance with the invention is in connection with testing of vehicle airbags as shown in Figs 2a-2b. In the testing rig shown in the drawing figures the inventive device is applied in the form of sheets 10 comprising four differently colored abrasion-removable layers, on cylinders 11 representing the arms of the driver. Between the cylinders, there is arranged a steering wheel 12 with an airbag 13 mounted thereon, which airbag is made to expand. The airbag expansion brings the sheets 10 into contact with the face of the airbag (Fig 2b), and consequently the sheets are exposed to abrasive force of varying strength. The abrasive force makes a pattern on the sheets, said pattern consisting of the colors of the individual layers. The areas where the deepest layer is visible correspond to the areas exposed to the strongest abrasive force, and so on.

Alternatively, a cylinder (not shown) representing the head of the driver could be arranged above the steering wheel in Fig 2. One example of the results of a test of this kind is shown in Fig 3. Although the black-and-white reproduction of the layers in this case does not reveal their different colors, it nonetheless clearly shows that the seams 15 of the airbag have caused violent abrasions.

When crash-test dummies are used, sheets in accordance with the invention may be applied in suitable places on the dummy prior to the test. In the case of surfaces comprising a double curve or having a more complex configuration it may be more suitable to use small pieces of a sheet in accordance with the invention. It is understood that the sheet could be made from a stretchable material, such as a foil material, which makes its application on any surface easier. In this case, the abrasion removable layers must possess properties ensuring that they are not damaged by the effects of elongation and other stress that may arise in the sheet.

The plastic material in the form of e.g. plastic foil is a material that is more resistant to elongation and stress that may arise when a sheet is folded or bent. Alternatively, the sheet may be replaced by a abrasion-removable layer of plastic foil, i.e. several distinguishable abrasion-removable plastic-foil layers are arranged on top of one another and so as to cover each other in the same manner as the scrape-off paste and the UV varnish. These layers are then advantageously applied directly on optional surfaces of a comparatively more sinuous or complex configuration. The surfaces may for instance be the complex shapes of the face of the crash-test dummy. The plastics material must not be too tough, since a scraped-off layer, if too tough, may tend to resume its original shape, i.e. the inherent resilience of the material tends to cause the abrasion sore to "heal". The area of the scraped layer then becomes more difficult to assess, i.e. a plastics layer, if too resilient, results in a higher degree of uncertainty of measurement.

Instead of coloring the individual layers for purposes of distinction between them, it is possible to use different layers having individual patterns, such as patterns of lines or dots of various kinds.

One variant of the invention might involve applying a top-coat, for instance in the form of UV varnish, on the uppermost scrape-off coat only, i.e. on the coat furthest away from the substrate. One advantage of applying a top-coat on at least the uppermost or only the uppermost scrape-off coat is that the layers will have a higher degree of protection against unintentional abrasion that may arise for instance from careless handling of the sheets.

It is likewise possible to use different materials for each layer to construct the device in accordance with the invention. For example, scrape-off paste or UV varnish in different combinations may be applied on a scrape-off plastic-foil layer, etc.

In the most general aspect of the invention, the latter may obviously be used in a large variety of other fields of application in addition to its use in crash tests. As examples may be mentioned, testing of materials to determine their properties when exposed to abrasive force. This property could be made use of also to choose suitable wall-covering materials in premises, where people risk coming into rough contact with walls and floors, such as in sports halls for example.

## Claims

1. A method for determination of abrasion on a surface subjected to abrasive forces, according to which method a substrate is provided with at least two distinguishable superposed layers covering each other, said layers being removable by scraping, **characterized in that** the measurement of the abrasion is effected by exposing the layer-coated substrate to abrasive forces, followed by reading of the degree of penetration, if any, through one or several of the different layers, **in that** each layer is calibrated to correspond to a pre-determined measure of abrasive force upon penetration of the respective layer, by varying the adhesion to the layer or substrate underneath, and **in that** the abrasive force required to scrape off a certain layer decreases the further from the substrate said layer is located.

2. A method as claimed in claim 1, **characterized in that** the thickness of each individual layer decreases the further from the substrate said layer is located, in consequence whereof the adhesion of the layers decreases.

3. A method as claimed in claim 1, **characterized in that** the location of the penetration on the substrate and/or the size of the scraped-off area on the respective layer is/are read and assessed.

4. A method as claimed in any one of the preceding claims, **characterized in that** the layers have different reactants and/or different crystalline properties and/or different reflection coefficients, the different layers reacting differently to radiation, whereby the area exposed to abrasive force may be radiated in order to identify areas exposed to abrasive force of different strength, and/or different colors, and/or different patterns.

5. A method as claimed in any one of the preceding claims, **characterized in that** the step of reading penetration, if any, and of assessing the actual abrasion, is effected by reproducing electronically and thereafter identifying and locating by means of data processing the parts of the surface uncovered as a result of abrasion.

6. A method as claimed in any one of the preceding claims, **characterized in that** the step of subjecting the layers to abrasive force comprises bringing the layers into contact with an expanding airbag.

7. A method as claimed in any one of the preceding claims, **characterized by** applying the layers on a crash-test dummy and/or other interior surfaces in a vehicle, in order to assess the abrasive forces arising from a vehicle crash.

8. A device for determination of abrasion to a surface subjected to abrasive forces, wherein a substrate is provided with at least two distinguishable superposed layers covering each other, said layers being removable by scraping, **characterized in that** each layer is calibrated to correspond to a pre-determined measure of abrasive force upon penetration of the respective layer by varying the adhesion to the underlying layer or substrate, and **in that** the measure of the abrasive force required to scrape off a certain layer decreases the closer to the surface that said layer is located.

9. A device as claimed in claim 8, **characterized in that** the thickness of the layers decreases as calculated from the substrate.

10. A device as claimed in claim 8, **characterized in that** each layer is calibrated to correspond to a certain type of injury or level of injury to the human skin.

11. A device as claimed in any one of claims 8 - 10, **characterized in that** the substrate is a sheet of preferably paper or that the substrate is a crash-test dummy or other interior surfaces in a vehicle.

12. A device as claimed in any one of claims 8 - 11, **characterized in that** the layers have different colors and/or patterns and/or reactants and/or different crystalline properties and/or different reflection coefficients.

13. A device as claimed in any one of claims 8 - 12, **characterized in that** at least one and preferably all layers comprises a scrape-off coat and a top-coat, said top-coat having a harder surface that the scrape-off coat.

14. A device as claimed in claim 13, **characterized in that** the thickness of the top-coats decreases as calculated from the substrate.

15. A device as claimed in one of claims 13 or 14, **characterized in that** the uppermost scrape-off coat is entirely without a top-coat.

16. A device as claimed in one of claims 13 or 14, **characterized in that** only the outermost layer consists of a scrape-off coat and a top-coat, whereas underlying layers consist of a scrape-off coat only.

17. A device as claimed in any one of claims 8 - 12, **characterized in that** the scrape-off coat consists of a colored scrape-off paste and the top-coat of varnish, preferably a UV varnish.

18. A device as claimed in any one of claims 8 - 12, **characterized in that** the various layers consist of a plastics material, preferably of plastic foil.

19. A device as claimed in any one of claims 8 - 18, **characterized in that** different materials are used to manufacture the respective layer, preferably plastic foil, a UV varnish and a scrape-off paste.

## Patentansprüche

1. Verfahren zum Bestimmen der Abschürfung auf einer Oberfläche, die Abschürfungskräften ausgesetzt ist, wobei entsprechend diesem Verfahren ein Substrat mit mindestens zwei unterscheidbar übereinander liegenden Schichten versehen ist, die einander abdecken, wobei die Schichten durch Abkratzen entfernbar sind, **dadurch gekennzeichnet, dass** die Messung der Abschürfung ausgeführt wird, indem das schichtabgedeckte Substrat Abschürfungskräften ausgesetzt wird, gefolgt von einem Ablesen des Grades des Durchdringens - sofern überhaupt vorhanden - durch eine oder mehrere der unterschiedlichen Schichten, wobei jede Schicht eingestellt ist, einem vorgegebenen Ausmaß der Abschürfkraft beim Durchdringen der jeweiligen Schicht zu entsprechen, indem das Haftvermögen zur Schicht oder zum Substrat darunter verändert wird und wobei die Abschürfkraft, die zum Abkratzen einer bestimmten Schicht benötigt wird, abnimmt, je weiter weg vom Substrat die Schicht angeordnet ist.

2. Verfahren nach Anspruch 1, **dadurch gekennzeichnet, dass** die Dicke jeder einzelnen Schicht abnimmt, je weiter weg vom Substrat die Schicht angeordnet ist, was zur Folge hat, dass das Haftvermögen der Schichten abnimmt.

3. Verfahren nach Anspruch 1, **dadurch gekennzeichnet, dass** die Lage der Durchdringung am Substrat und/oder die Größe des abgekratzten Bereiches an der jeweiligen Schicht abgelesen und bewertet wird/werden.

4. Verfahren nach einem der vorhergehenden Ansprüche, **dadurch gekennzeichnet, dass** die Schichten unterschiedliche Reaktanten und/oder unterschiedliche kristalline Eigenschaften und/oder unterschiedliche Reflexionskoeffizienten aufweisen, wobei die unterschiedlichen Schichten unterschiedlich auf Strahlung reagieren, wodurch der Bereich, welcher der Abschürfkraft ausgesetzt ist, bestrahlt werden kann, um Bereiche zu kennzeichnen, die Abschürfkräften unterschiedlicher Stärke ausgesetzt sind, und/oder dass sie unterschiedliche Farben und/oder unterschiedliche Muster aufweisen.

5. Verfahren nach einem der vorhergehenden Ansprüche, **dadurch gekennzeichnet, dass** der Schritt zum Ablesen der Durchdringung - sofern überhaupt vorhanden - und zum Bewerten der tatsächlichen Abschürfung ausgeführt wird, indem die Teile der Oberfläche, die im Ergebnis einer Anschürfung unbedeckt sind, mit den Mitteln der Datenverarbeitung elektronisch abgebildet und anschließend **gekennzeichnet** sowie lokalisiert werden.

6. Verfahren nach einem der vorhergehenden Ansprüche, **dadurch gekennzeichnet, dass** der Schritt, in dem die Schichten der Abschürfkraft ausgesetzt werden, ein in Kontakt Bringen der Schichten mit einem sich aufblähenden Airbag umfasst.

7. Verfahren nach einem der vorhergehenden Ansprüche, **dadurch gekennzeichnet, dass** die Schichten auf einer Crashtest-Puppe und/oder auf anderen inneren Oberflächen in einem Fahrzeug aufgebracht werden, um die Abschürfkräfte, die von einem Fahrzeugaufprall herrühren, zu bewerten.

8. Vorrichtung zum Bestimmen der Abschürfung an einer Oberfläche, die Abschürfkräften ausgesetzt ist, wobei ein Substrat mit mindestens zwei unterscheidbar übereinander liegenden Schichten versehen ist, die einander abdecken, wobei die Schichten durch Abkratzen entfernbar sind, **dadurch gekennzeichnet, dass** jede Schicht eingestellt ist, einem vorgegebenen Ausmaß der Abschürfkraft beim Durchdringen der jeweiligen Schicht zu entsprechen, indem das Haftvermögen zur darunter liegenden Schicht oder zum Substrat verändert wird und wobei das Ausmaß der Abschürfkraft, die zum Abkratzen einer bestimmten Schicht benötigt wird, abnimmt, je näher zur Oberfläche jene Schicht angeordnet ist.

9. Vorrichtung nach Anspruch 8, **dadurch gekennzeichnet, dass** die Dicke der Schichten vom Substrat aus wie berechnet abnimmt.

10. Vorrichtung nach Anspruch 8, **dadurch gekennzeichnet, dass** jede Schicht eingestellt ist, einer bestimmten Art der Verletzung oder einem Verletzungsgrad der menschlichen Haut zu entsprechen.

11. Vorrichtung nach einem der Ansprüche 8 - 10, **dadurch gekennzeichnet, dass** das Substrat ein Blatt vorzugsweise aus Papier ist oder dass das Substrat durch eine Crashtestpuppe oder andere innere Oberflächen in einem Fahrzeug gegeben ist.

12. Vorrichtung nach einem der Ansprüche 8 - 11, **dadurch gekennzeichnet, dass** die Schichten verschiedene Farben und/oder Muster und/oder Reaktanten und/oder unterschiedliche kristalline Eigenschaften und/oder unterschiedliche Reflexionskoeffizienten aufweisen.

13. Vorrichtung nach einem der Ansprüche 8 - 12, **dadurch gekennzeichnet, dass** mindestens eine der und vorzugsweise alle Schichten eine Abkratzlage und eine Decklage aufweisen, wobei die Decklage eine härtere Oberfläche als die Abkratzlage aufweist.

14. Vorrichtung nach Anspruch 13, **dadurch gekennzeichnet, dass** die Dicke der Decklagen vom Substrat aus wie berechnet abnimmt.

15. Vorrichtung nach einem der Ansprüche 13 oder 14, **dadurch gekennzeichnet, dass** die äußerste Abkratzlage gänzlich ohne Decklage ist.

16. Vorrichtung nach einem der Ansprüche 13 oder 14, **dadurch gekennzeichnet, dass** nur die äußerste Schicht aus einer Abkratzlage und einer Decklage besteht, während darunter liegende Schichten nur aus einer Abkratzlage bestehen.

17. Vorrichtung nach einem der Ansprüche 8 - 12, **dadurch gekennzeichnet, dass** die Abkratzlage aus einer gefärbten Abkratzpaste und die Decklage aus Lack, vorzugsweise UV-Lack, besteht.

18. Vorrichtung nach einem der Ansprüche 8 - 12, **dadurch gekennzeichnet, dass** die verschiedenen Schichten aus einem Kunststoffmaterial, vorzugsweise aus Kunststofffolie, bestehen.

19. Vorrichtung nach einem der Ansprüche 8 - 18, **dadurch gekennzeichnet, dass** zur Herstellung der jeweiligen Schicht unterschiedliche Materialien, vorzugsweise Kunststofffolie, ein UV-Lack und eine Abkratzpaste verwendet werden.

## Revendications

1. Procédé pour la détermination de l'abrasion sur une surface que l'on soumet à des forces abrasives, selon lequel procédé on fournit un substrat avec au moins deux couches distinguables superposées qui se couvrent l'une l'autre, lesdites couches étant retirable par raclage, **caractérisé en ce que** l'on effectue la mesure de l'abrasion en exposant le substrat enduit d'une couche aux forces abrasives, suivi par la lecture du degré de pénétration, s'il y en a, à travers une ou plusieurs des différentes couches, **en ce que** l'on calibre chaque couche pour qu'elle corresponde à une mesure prédéterminée de la force abrasive lors de la pénétration de la couche respective au moyen de la variation de l'adhérence en dessous de la couche ou du substrat, et **en ce que** la force abrasive nécessaire pour enlever en raclant une certaine couche diminue plus l'emplacement de ladite couche est éloignée du substrat.

2. Procédé selon la revendication 1, **caractérisé en ce que** l'épaisseur de chaque couche individuelle diminue plus l'emplacement de ladite couche est éloigné du substrat, en conséquence de quoi l'adhérence des couches diminue.

3. Procédé selon la revendication 1, **caractérisé en ce que** l'emplacement de la pénétration sur le substrat et/ou la taille de l'aire enlevée par raclage sur la couche respective est/sont lue(s) et évaluée(s).

4. Procédé selon l'une quelconque des revendication précédentes, **caractérisé en ce que** les couches ont des réactifs différents et/ou des propriétés cristallines différentes et/ou des coefficients de réflexion, les différentes couches réagissant différemment à un rayonnement, grâce à quoi l'aire exposée à la force abrasive peut être irradiée de façon à identifier les aires que l'on expose à la force abrasive de forces différentes, et/ou de couleurs différentes, et/ou de motifs différents.

5. Procédé selon l'une quelconque des revendication précédentes, **caractérisé en ce que** l'étape de lecture de la pénétration, si c'est le cas, et d'évaluation de l'abrasion réelle, est effectuée en reproduisant de façon électronique et ensuite par identification et localisation au moyen de traitement de données des parties de la surface non couvertes comme résultat de l'abrasion.

6. Procédé selon l'une quelconque des revendication précédentes, **caractérisé en ce que** l'étape de soumission des couches à une force abrasive comprend de mettre les couches en contact avec un coussin d'air qui se dilate.

7. Procédé selon l'une quelconque des revendication précédentes, **caractérisé en ce qu'**en appliquant les couches sur un mannequin pour essai de choc et/ou d'autres surfaces intérieures dans un véhicule, de façon à évaluer les forces abrasives qui se produisent en provenance de l'écrasement d'un véhicule.

8. Dispositif pour la détermination de l'abrasion d'une surface que l'on soumet à des forces abrasives, dans lequel on fournit un substrat avec au moins deux couches distinguables superposées qui se couvrent l'une l'autre, lesdites couches étant retirables par raclage, **caractérisé en ce que** l'on calibre chaque couche pour qu'elle corresponde à une mesure prédéterminée de la force abrasive lors de la pénétration de la couche respective au moyen de la variation de l'adhérence à la couche ou le substrat sous jacents, et **en ce que** la mesure de la force abrasive nécessaire pour enlever par raclage une certaine couche diminue plus ladite couche est près de la surface.

9. Dispositif selon la revendication 8, **caractérisé en ce que** l'épaisseur des couches diminue comme calculée à partir du substrat.

10. Dispositif selon la revendication 8, **caractérisé en ce que** l'on calibre chaque couche pour correspondre à un certain type de blessure ou de niveau de blessure à la peau humaine.

11. Dispositif selon l'une quelconque des revendications 8 à 10, **caractérisé en ce que** le substrat est de préférence une feuille de papier ou **en ce que** le substrat est un mannequin d'essai d'écrasement ou une des autres surfaces intérieures dans un véhicule.

12. Dispositif selon l'une quelconque des revendications 8 à 11, **caractérisé en ce que** les couches ont différentes couleurs et/ou motifs et/ou réactifs et/ou des propriétés cristallines différentes et/ou des coefficients de réflexion différents.

13. Dispositif selon l'une quelconque des revendications 8 à 12, **caractérisé en ce qu'**au moins une et de préférence toutes les couches comprennent un enduit d'enlèvement par raclage et un enduit supérieur, ledit enduit supérieur ayant une surface plus dure que l'enduit d'enlèvement par raclage.

14. Dispositif selon la revendication 13, **caractérisé en ce que** l'épaisseur des enduits supérieurs diminue en tant que calculé à partir du substrat.

15. Dispositif selon l'une des revendications 13 ou 14, **caractérisé en ce que** l'enduit d'enlèvement par raclage le plus haut est entièrement sans un enduit supérieur.

16. Dispositif selon l'une des revendications 13 ou 14, **caractérisé en ce que** seulement la couche la plus haute consiste en un enduit d'enlèvement par raclage et un enduit supérieur, grâce à quoi les sous-couches sous-jacentes consistent seulement en un enduit d'enlèvement par raclage.

17. Dispositif selon l'une quelconque des revendications 8 à 12, **caractérisé en ce que** la couche d'enlèvement par raclage consiste en une pâte colorée d'enlèvement par raclage et la couche supérieure en un vernis, de préférence un vernis sensible aux ultraviolets.

18. Dispositif selon l'une quelconque des revendications 8 à 12, **caractérisé en ce** les différentes couches consistent en un matériau plastique, de préférence une feuille de plastique.

19. Dispositif selon l'une quelconque des revendications 8 à 18, **caractérisé en ce** l'on utilise différents matériaux pour fabriquer la couche respective, de préférence une feuille plastique, un vernis sensible aux ultraviolets et une pâte d'enlèvement par raclage.
